Europäisches Patentamt

European Patent Office

Office européen des brevets

(11) Veröffentlichungsnummer: **0 376 030**
**A2**

(12) **EUROPÄISCHE PATENTANMELDUNG**

(21) Anmeldenummer: 89122765.4

(22) Anmeldetag: 09.12.89

(51) Int. Cl.5: **G02F 1/137, G02F 1/1337**

(30) Priorität: 24.12.88 DE 3843769

(43) Veröffentlichungstag der Anmeldung:
04.07.90 Patentblatt 90/27

(84) Benannte Vertragsstaaten:
**DE FR GB IT NL**

(71) Anmelder: **Nokia Unterhaltungselektronik
(Deutschland) GmbH
Östliche Karl-Friedrich-Strasse 132
D-7530 Pforzheim(DE)**

(72) Erfinder: **Brosig, Stefan, Dr.
Teckstrasse 51B
D-7000 Stuttgart(DE)**

(54) **Nematische Flüssigkristallzelle.**

(57) Es wird eine Flüssigkristallzelle (1) mit zugehörigen Polarisationsfiltern (2, 3) angegeben, bei der die Mikrorillen der Orientierungsschichten (6, 8) parallel oder antiparallel ausgerichtet sind, die Flüssigkristallschicht (7) aus einem nematischen Flüssigkristall besteht, und die Dicke der Flüssigkristallschicht (7) kleiner als 3 Mikrometer ist, so daß sich keine Helix der Flüssigkristallmoleküle ausbilden kann.

Die Flüssigkristallzelle (1) kann in einer Anzeige oder in einem optischen Drucker ihre Anwendung finden.

Vorteilhaft sind das gute Kontrastverhältnis, die schnellen Schaltzeiten und die kostengünstige Herstellungsmöglichkeit.

Fig. 2

EP 0 376 030 A2

## Nematische Flüssigkristallzelle

Die Erfindung betrifft eine nematische Flüssigkristallzelle gemäß dem Oberbegriff des Anspruchs 1.

Eine derartige nematische Flüssigkristallzelle ist aus ELO 6/1987, SS. 70 ff. bekannt. Die bekannte Flüssigkristallzelle ist als Flüssigkristallanzeige mit einem verdrehten nematischen Flüssigkristall ausgebildet. Die Moleküle derartiger verdrehter nematischer Flüssigkristalle bilden eine Helix derart, daß die Flüssigkristallmoleküle von einem bis zum andern Substrat um 90° oder mehr verdreht sind.

Derartige Flüssigkristallzellen weisen als Nachteil eine relativ hohe Schaltzeit auf.

Der Erfindung liegt die Aufgabe zugrunde, eine Flüssigkristallzelle mit einer kleineren Schaltzeit zu schaffen.

Die Aufgabe wird bei einer gattungsgemäßen Anordnung durch die kennzeichnenden Merkmale des Anspruchs 1 gelöst.

Weitere Ausgestaltungen der Erfindung sind den übrigen Ansprüchen zu entnehmen.

Die mit der Erfindung erzielten Vorteile bestehen insbesondere darin, daß trotz geringer Dicke der Flüssigkristallschicht eine hohe Dickentoleranz zugelassen werden kann. Ferner weisen sie gegen-über einigen verdrehten nematischen Flüssigkristal-len ein hohes Kontrastverhältnis auf.

Zwei Ausführungsbeispiele der Erfindung sind in den Figuren 1 bis 4 abgebildet und im folgenden beschrieben. Es zeigen:

Fig. 1 eine schematische Darstellung einer Flüssigkristallzelle in bezug auf die dazugehörigen Polarisationsfilter,

Fig. 2 ein erstes Ausführungsbeispiel der Flüssigkristallzelle im Schnitt I/I ohne angelegtes elektrisches Feld,

Fig. 3 das Ausführungsbeispiel aus Fig. 2 mit angelegtem elektrischem Feld, und

Fig. 4 ein zweites Ausführungsbeispiel einer Flüssigkristallzelle ohne angelegtes elektrisches Feld.

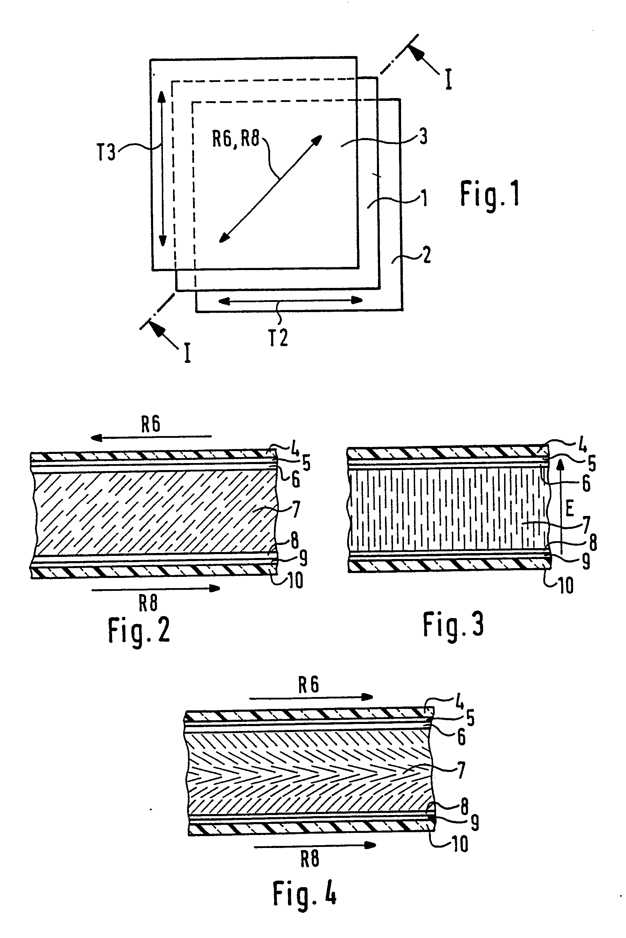

In Fig. 1 ist eine Flüssigkristallzelle 1 schematisch mit dazugehörigen Polarisationsfiltern 2, 3 in auseinandergezogener Darstellung abgebildet. Die Flüssigkristallzelle 1 weist die nachfolgend genannte und in den Figuren 2 bis 4 abgebildete Schichtenfolge auf. Auf einem ersten Substrat 4 befindet sich eine erste Elektrodenstruktur 5, eine erste Orientierungsschicht 6 mit Mikrorillen, eine Flüssigkristallschicht 7, eine zweite Orientierungsschicht 8 mit Mikrorillen, eine zweite Elektrodenstruktur 9 und ein zweites Substrat 10. Zwischen den Elektrodenstrukturen 5, 9 und den benachbarten Orientierungsschichten (6, 8) kann auch noch eine Isolationsschicht angebracht sein. Die Dicke der Flüssigkristallschicht 7 ist durch einen Abstandsrahmen vorgegeben (nicht abgebildet). Auf den Substraten 4 und 10 sind jeweils auf den den Elektrodenstrukturen 5, 9 gegenüberliegenden Seiten die Polarisationsfilter 2, 3 angebracht.

In Fig. 1 sind die Polarisationsrichtung T2, T3 der Polarisationsfilter 2, 3 und die Orientierungen, Längsrichtungen R6, R8 der Mikrorillen in den Orientierungsschichten 6, 8 eingezeichnet. Die Polarisationsrichtungen T2, T3 der beiden Polarisationsfilter 2, 3 bilden einen Winkel von 90°. Die Längsrichtungen R6, R8 der Mikrorillen bilden zu den Polarisationsrichtungen T2, T3 jeweils einen Winkel von 45°.

Die Substrate 4, 10 können aus Glas, Kunststoff oder einem anderen geeigneten transparenten Material bestehen. Sie können die Abmessungen einer Flüssigkristallzelle haben, die auch eine größere Fläche aufweist, auf der mehrere Flüssigkristallzellen gleichzeitig hergestellt werden können. Der Abstandsrahmen kann aus einem Abstandskörper bestehen, der die Flüssigkristallzelle in mehrere Bereiche unterteilt. Ebenso ist es auch möglich, daß im Flüssigkristall Kugeln oder Faserteilchen als Abstandshalter vorgesehen sind.

Bei dünnen Flüssigkristallzellen, und wenn der ansteuerbare Bereich der Flüssigkristallzelle die Randbereiche des Flüssigkristalls nicht miteinschließt, können die beiden Substrate auch direkt miteinander verklebt sein (nicht abgebildet).

Die Flüssigkristallzelle 1 kann in einer Flüssigkristallanzeige oder in einem optischen Drucker verwendet werden. Bei der Verwendung in einer Flüssigkristallanzeige ist beim Reflexionsbetrieb auf dem Polarisationsfilter ein Spiegel angebracht, der beim Transmissionsbetrieb entfällt oder weggeklappt wird. Da Flüssigkristallzellen an sich bekannt sind, wird hier nicht auf weitere Einzelheiten eingegangen.

Das erste Ausführungsbeispiel einer Flüssigkristallzelle 1 ist in Fig. 2 im Schnitt I/I abgebildet. Die Längsrichtung der Mikrorillen in den Orientierungsschichten 6, 8 liegt in der Papierebene. Die Mikrorillen sind durch Reiben erzeugt und weisen daher eine Vorzugsrichtung in Reibrichtung auf, die in den Figuren 2 und 4 mit Pfeilen R6 und R8 angegeben ist. Orientierungen mit einer Vorzugsrichtung können auch z.B. durch Aufdampfen oder Aufstäuben von Mikrorillen oder durch Ziehen von Langmuir-Blodgett-Filmen hergestellt sein.

Die Flüssigkristallschicht 7 besteht aus einem nematischen Flüssigkristall, die sSchichtdicke beträgt bis zu 3 Mikrometern. Dem Flüssigkristall zugefügte chirale Dotierungen müssen so gewählt sein, daß sich keine Helixe zwischen dem beiden Orientierungsschichten (6, 8) ausbildet.

Da sich die Flüssigkristallmoleküle in Reibrichtung und nicht in die entgegengesetzte Richtung neigen, richten sich die Flüssigkristallmoleküle ohne äußeres angelegtes elektrisches Feld bei antiparalleler Reibrichtung der Mikrorillen der beiden Substrate 6, 8 um den Pretiltwinkel geneigt parallel (Fig. 2) aus. Die Flüssigkristallzelle 1 erscheint mit den beiden Polarisationsfiltern 2, 3 versehen hell.

Werden nun Bereiche durch Anlegen einer Spannung zwischen den Elektrodenstrukturen 5 und 9 angesteuert, richten sich die Flüssigkristallmoleküle in den Bereichen, in denen das elektrische Feld einen Schwellwert EO übersteigt, homötrop im rechten Winkel zu den Orientierungsshichten 6, 8 aus. Die Flüssigkristallzelle 1 erscheint mit den beiden Polarisationsfiltern 2, 3 versehen an den angesteuerten Bereichen schwarz. Die minimale Transmission wird nicht durch die Flüssigkristallzelle 1 sondern durch die Qualität der Polarisationsfilter 2, 3 bestimmt.

Durch Anlegen eines elektrischen Feldes kleiner als EO lassen sich Graustufen erzeugen. Bei der Erzeugung von Schwarz-Weiß-Mustern werden keine hohen Anforderungen an die Dicke der Flüssigkristallschicht 7 gestellt, wodurch die Verwendung von billigen Substraten 4, 10, trotz der geringen Schichtdicke der Flüssigkristallschicht 7, ermöglicht wird. Die große Toleranz in der Dicke der Flüssigkristallschicht 7 ist eine Folge der nicht vorhandenen Helixe.

Bei einem zweiten Ausführungsbeispiel sind die Mikrorillen der Orientierungsschichten 6, 8 parallel gemäß den Pfeilen R6, R8 aus Fig. 4 ausgerichtet. In diesem Fall stellt sich ohne äußeres angelegtes elektrisches Feld keine parallele Ausrichtung der Kristallmoleküle, aber auch keine helixartige Verdrehung der Flüssigkristallmoleküle, wie bei einer bekannten TN-(twisted nematic-)Zelle, sondern nur eine Verdrehung in einer Ebene (in Fig. 4 die Papierebene) gemäß der Fig. 4 ein. In Bereichen mit angelegtem elektrischem Feld mit der Feldstärke größer als EO richten sich die Flüssigkristallmoleküle wie beim ersten Ausführungsbeispiel homöotrop und im rechten Winkel zu den Orientierungsschichten (6, 8) aus.

Besonders hervorzuheben ist noch, daß die Flüssigkristallzellen gemäß den Ausführungsbeispielen aufgrund der geringen Dicke der Flüssigkristallschicht 7 und aufgrund der unkomplizierten Relaxation - es muß sich keine Helixstruktur bilden, sondern die Flüssigkristallmoleküle bewegen sich nur in einer Ebene - eine sehr geringe Schaltzeit im Mikrosekundenbereich aufweisen.

## Ansprüche

1. Flussigkristallzelle, die zwei Substrate, jeweils eine darauf befindliche Orientierungsschicht und eine zwischen den Orientierungsschichten angeordnete nematische Flüssigkristallschicht aufweist, und zwischen zwei Polarisationsfiltern befindlich ist, wobei den Orientierungsschichten eine die Ausrichtung der angrenzenden Flüssigkristallmoleküle beeinflussende Orientierung eingeprägt ist, **dadurch gekennzeichnet,** daß die Orientierungen zweier Orientierungsschichten (6, 8), skalar betrachtet, zueinander parallel und die Flüssigkristallmoleküle parallel unter einem Tiltwinkel kleiner als 90° ohne äußeres elektrisches Feld (E) ausgerichtet sind.

2. Flüssigkristallzelle nach Anspruch 1, dadurch gekennzeichnet, daß die Orientierungen der Orientierungsschichten (6, 8) eine Vorzugsrichtung aufweisen, wie dies z.B. bei geriebenen Mikrorillen der Fall ist, und die Orientierung der Orientierungsschicht (6) gegenüber der der Orientierungsschicht (8), vektoriell betrachtet, antiparallel ausgerichtet ist.

3. Flüssigkristallzelle nach Anspruch 1, dadurch gekennzeichnet, daß die Dicke der Flüssigkristallschicht (7) kleiner als 3 Mikrometer ist.

4. Flüssigkristallzelle nach Anspruch 1, dadurch gekennzeichnet, daß die Polarisationsrichtung (T2, T3) der Polarisatoren (2, 3) mit den Orientierungen (R6, R8) der Orientierungsschichten (6, 8) einen Winkel von 45° bilden.

Fig.1

Fig.2

Fig.3

Fig.4